(19) Europäisches Patentamt
European Patent Office
Office européen des brevets

(11) EP 0 840 758 B1

(12) EUROPÄISCHE PATENTSCHRIFT

(45) Veröffentlichungstag und Bekanntmachung des Hinweises auf die Patenterteilung:
**06.11.2002 Patentblatt 2002/45**

(21) Anmeldenummer: **96925685.8**

(22) Anmeldetag: **09.07.1996**

(51) Int Cl.7: **C08G 65/48**, C08L 71/00, C08L 77/00

(86) Internationale Anmeldenummer:
**PCT/EP96/02990**

(87) Internationale Veröffentlichungsnummer:
**WO 97/004018 (06.02.1997 Gazette 1997/07)**

(54) **VERFAHREN ZUR HERSTELLUNG VON VERKAPPTEN POLYARYLENETHERN**

PROCESS FOR PRODUCING MASKED POLYARYLENE ETHERS

PROCEDE DE PRODUCTION DE POLYARYLENETHERS MASQUES

(84) Benannte Vertragsstaaten:
**BE DE DK ES FR GB IT NL**

(30) Priorität: **22.07.1995 DE 19526855**

(43) Veröffentlichungstag der Anmeldung:
**13.05.1998 Patentblatt 1998/20**

(73) Patentinhaber: **BASF AKTIENGESELLSCHAFT
67056 Ludwigshafen (DE)**

(72) Erfinder:
- **WEBER, Martin
D-67487 Maikammer (DE)**
- **FISCHER, Christian
D-67065 Ludwigshafen (DE)**

(56) Entgegenhaltungen:
**EP-A- 0 195 448**
**EP-A- 0 213 637**
**EP-A- 0 288 974**
**EP-A- 0 613 916**
**DE-A- 4 114 455**

EP 0 840 758 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zur Herstellung von Polyarylenethern mit wiederkehrenden Einheiten der allgemeinen Formel I

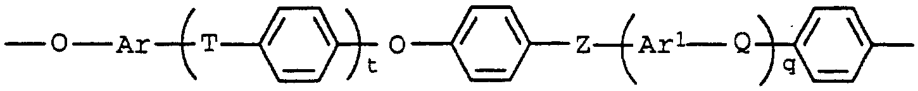

(I)

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $-R^aC=CR^b-$ und $-CR^cR^d-$ sein können, mit der Maßgabe, daß mindestens eine der Gruppen T, Q oder Z $-SO_2-$ oder C=O bedeutet und wenn t und q 0 sind Z $-SO_2-$ oder C=O ist,

$R^a$ und $R^b$ jeweils ein Wasserstoffatom oder eine $C_1$- bis $C_{10}$-Alkyl-gruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, zusammen mit dem C-Atom an das sie gebunden sind, eine $C_4$- bis $C_7$-Cycloalkylgruppe bilden, die mit einer oder mehreren $C_1$- bis $C_6$-Alkylgruppen substituiert sein kann, bedeuten,
Ar und $Ar^1$ für $C_6$- bis $C_{18}$-Arylgruppen stehen, wobei diese unsubstituiert sein können, oder mit $C_1$- bis $C_{10}$-Alkyl, $C_6$- bis $C_{18}$-Aryl, $C_1$ bis $C_{10}$-Alkoxy oder Halogen substituiert sein können
und Anhydridendgruppen der Formel II

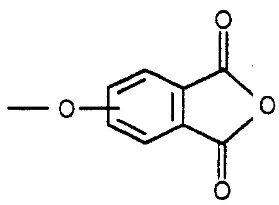

(II)

(Polyarylenether A).

Darüber hinaus betrifft die vorliegende Erfindung die Verwendung der nach dem erfindungsgemäßen Verfahren hergestellten Polyarylenethern A zur Herstellung von Formmassen sowie die Formmassen selbst.

Polyarylenether mit Anhydridendgruppen, die über Estergruppen mit der Polymerkette verknüpft sind, waren aus der EP-A-613 916 bekannt. In dieser Schrift sind auch deren Mischungen mit Polyamiden veröffentlicht.

Die Anbindung von Anhydridendgruppen an Polyarylenether kann auch, wie von C.L. Myers, ANTEC '92, 1992, 1, 1420, beschrieben, durch Umsetzung aminoterminierter Polyarylenether mit einer überschüssigen Menge Dianhydrid erfolgen.

Aus der US-A-4,642,327 war ein Verfahren zur Herstellung von oligomeren Arylenethern mit über Sauerstoff gebundenen Anydridendgruppen bekannt. Danach werden in einem ersten Schritt die Dialkalimetallsalze der Oligomeren mit einem 1,2-Dicyanonitrobenzol umgesetzt. In einem zweiten Schritt werden die Dinitrile hydrolysiert, um anschließend zu den Anhydriden cyclisiert zu werden. Dieses Verfahren ist um so weniger praktikabel, je höher die Molekulargewichte der eingesetzten Arylenether sind, da sich die Zwischenstufe nur noch schlecht reinigen läßt. Demzufolge eignet sich dieses Verfahren auch nicht für kommerzielle Zwecke.

Lediglich für niedermolekulare Phenole war beschrieben, daß sich diese mit Halogenphthalsäureanhydriden umsetzen lassen (W.T. Schwartz, High Performance Polymers, 1990, 2, 189).

Aufgabe der vorliegenden Erfindung war es, ein Verfahren zur Herstellung von Polyarylenethern mit über Sauerstoff verknüpften Anhydridendgruppen, wie sie eingangs beschrieben sind, zur Verfügung zu stellen, mit dem auch höhermolekulare Polymere zugänglich sind.

Demgemäß wurde ein Verfahren gefunden, das sich dadurch auszeichnet, daß man Polyarylenether mit wiederkehrenden Einheiten der allgemeinen Formel I und Hydroxyendgruppen (Polyarylenether A') mit Phthalsäureanhydriden der allgemeinen Formel III

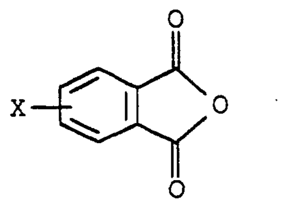

(III)

worin X Fluor, Chlor, Brom oder Jod bedeutet, in einem Lösungsmittel in Gegenwart von Kaliumfluorid umsetzt.

Die in der allgemeinen Formel I

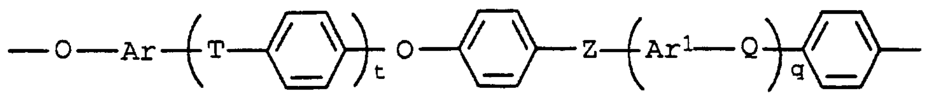

(I)

genannten Variablen t und q können jeweils den Wert 0, 1, 2 oder 3 annehmen. T, Q und Z können unabhänging voneinander gleich oder verschieden sein. Sie können eine chemische Bindung oder eine Gruppe ausgewählt aus -O-, $-SO_2-$, -S-, C=O, -N=N- und S=O sein. Daneben können T, Q und Z auch für eine Gruppe der allgemeinen Formel $-R^aC=CR^b-$ oder $-CR^cR^d-$ stehen, wobei $R^a$ und $R^b$ jeweils Wasserstoff oder $C_1$ bis $C_{10}$-Alkylgruppen, $R^c$ und $R^d$ jeweils Wasserstoff, $C_1$- bis $C_{10}$-Alkyl- wie Methyl, Ethyl, n-Propyl, i-Propyl, t-Butyl, n-Hexyl, $C_1$- bis $C_{10}$-Alkoxy wie Methoxy, Ethoxy, n-Propoxy, i-Propoxy, n-Butoxy oder $C_6$- bis $C_{18}$-Arylgruppen wie Phenyl oder Naphthyl bedeuten. $R^c$ und $R^d$ können auch zusammen mit dem Kohlenstoffatom, an das sie gebunden sind, zu einem Cycloalkylring mit 4 bis 7 Kohlenstoffatomen verknüpft sein. Bevorzugt werden darunter Cyclopentyl oder Cyclohexyl. Die Cycloalkylringe können unsubstituiert sein oder mit einem oder mehreren, bevorzugt zwei oder drei $C_1$- bis $C_6$-Alkylgruppen substituiert sein. Zu den bevorzugten Substituenten der Cycloalkylringe zählt Methyl. Bevorzugt werden Polyarylenether A' eingesetzt, in denen T, Q und Z -O-, $-SO_2-$, C=O, eine chemische Bindung oder eine Gruppe der Formel $-CR^cR^d$ bedeuten. Zu den bevorzugten Resten $R^c$ und $R^d$ zählen Wasserstoff und Methyl. Von den Gruppen T, Q und Z bedeutet mindestens eine $-SO_2-$ oder C=O. Sind die beiden Variablen t und q 0, dann ist Z entweder $-SO_2-$ oder C=O, bevorzugt $-SO_2-$. Ar und $Ar^1$ stehen für $C_6$- bis $C_{18}$-Arylgruppen, wie 1,5-Naphthyl, 1,6-Naphthyl, 2,7-Naphthyl, 1,5-Anthryl, 9,10-Anthryl, 2,6-Anthryl, 2,7-Anthryl oder Biphenyl, insbesondere Phenyl. Vorzugsweise sind diese Arylgruppen nicht substituiert. Sie können jedoch einen oder mehrere, beispielsweise zwei Substituenten haben. Als Substituenten kommen $C_1$- bis $C_{10}$-Alkyl- wie Methyl, Ethyl, n-Propyl, i-Propyl, t-Butyl, n-Hexyl, $C_6$- bis $C_{18}$-Aryl wie Phenyl oder Naphthyl, $C_1$- bis $C_{10}$-Alkoxyreste wie Methoxy, Ethoxy, n-Propoxy, i-Propoxy, n-Butoxy und Halogenatome in Betracht. Zu den davon bevorzugten Substituenten gehören Methyl, Phenyl, Methoxy und Chlor.

Einige geeignete wiederkehrende Einheiten sind im folgenden aufgeführt:

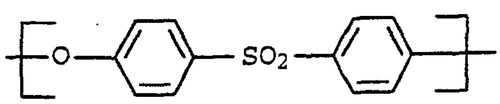

($I_1$)

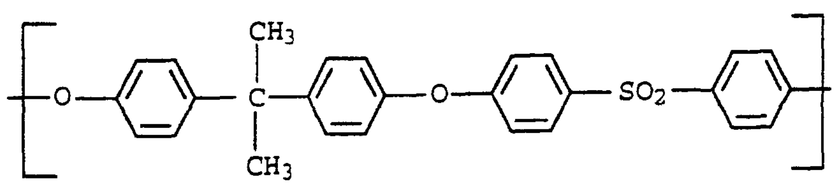

($I_2$)

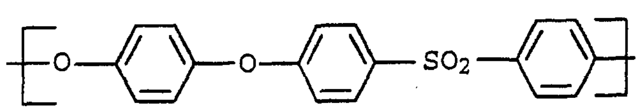

($I_3$)

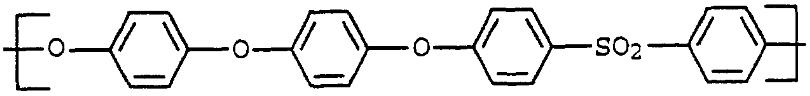

(I4)

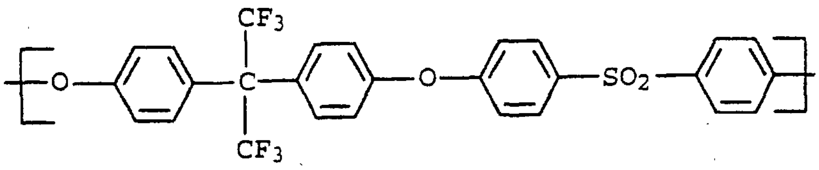

(I5)

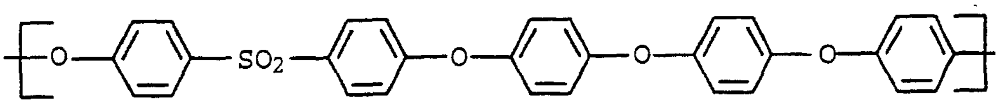

(I6)

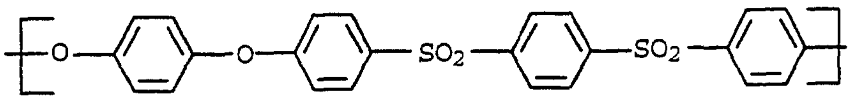

(I7)

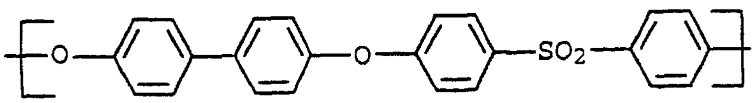

(I8)

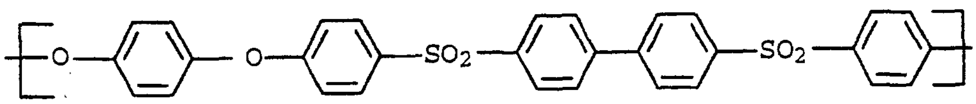

(I9)

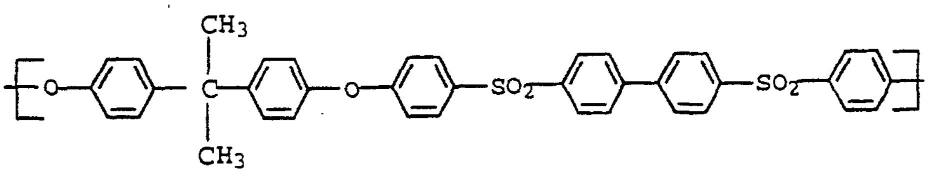

(I10)

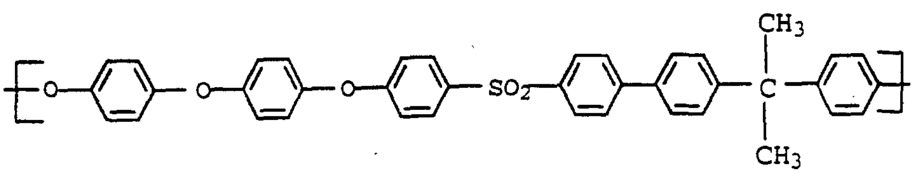

(I11)

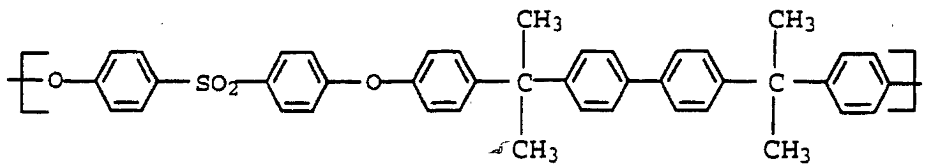

$(I_{12})$

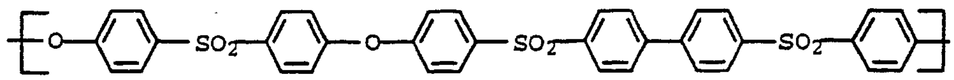

$(I_{13})$

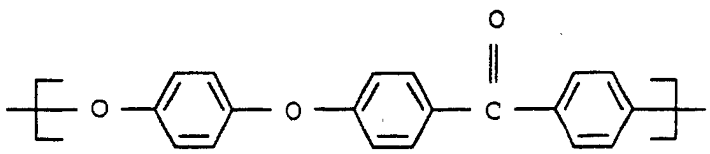

$(I_{14})$

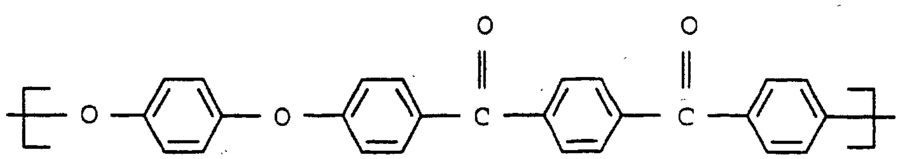

$(I_{15})$

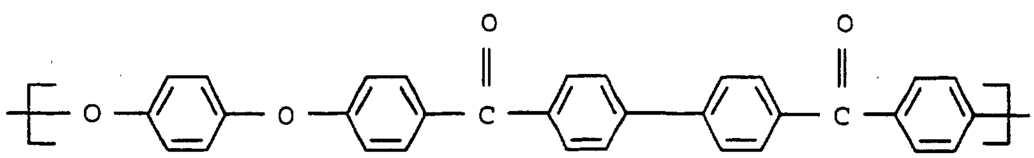

$(I_{16})$

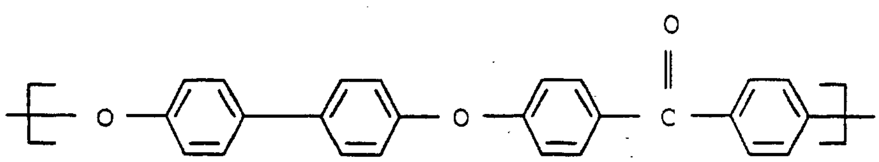

$(I_{17})$

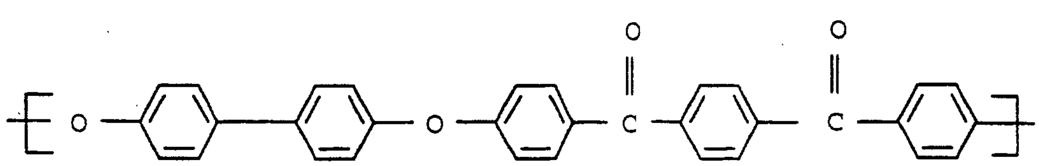

$(I_{18})$

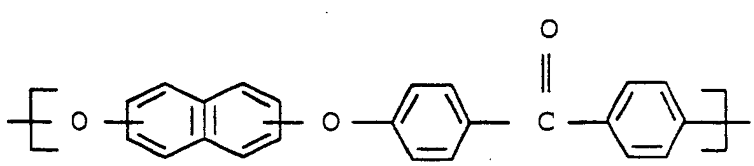

$(I_{19})$

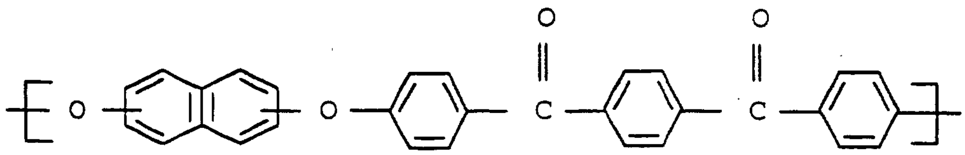
(I20)

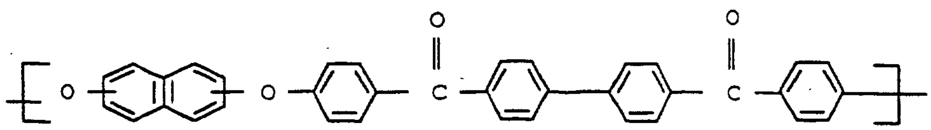
(I21)

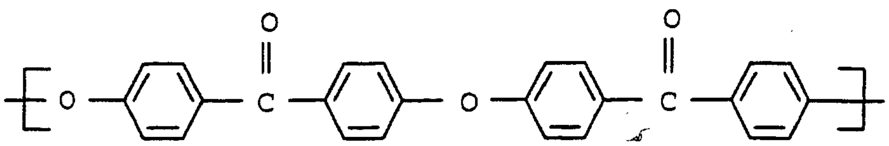
(I22)

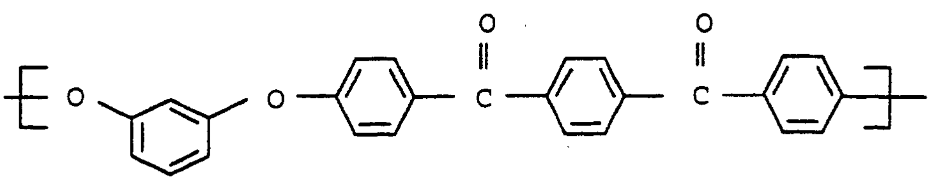
(I23)

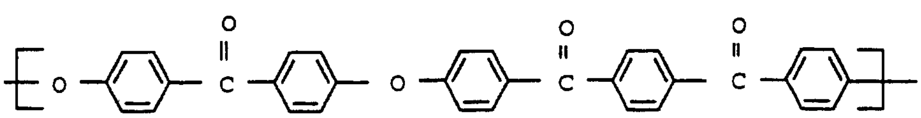
(I24)

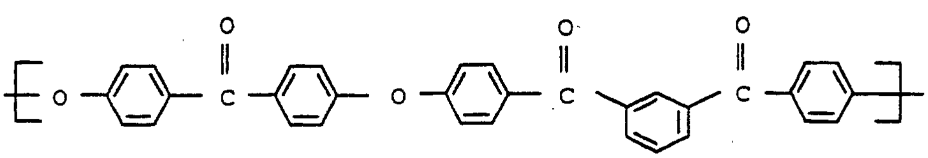
(I25)

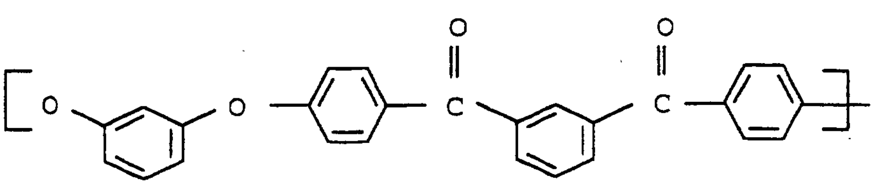
(I26)

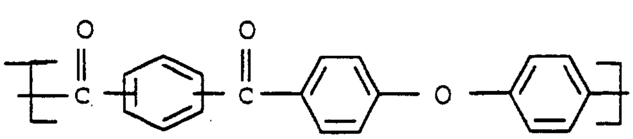
(I27)

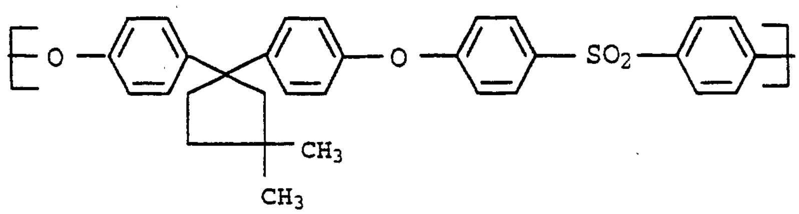
($I_{28}$)

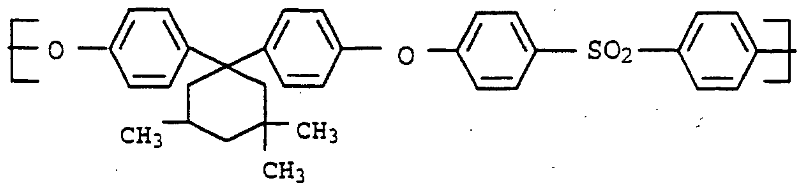
($I_{29}$)

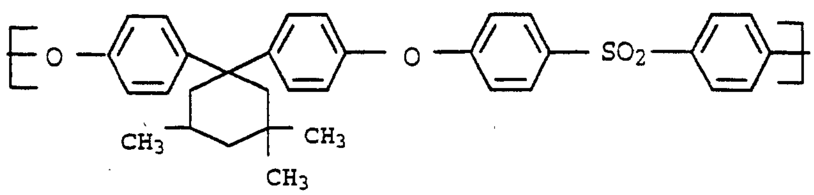
($I_{30}$)

Ganz besonders bevorzugt werden Polyarylenether A' mit wiederkehrenden Einheiten ($I_1$), ($I_2$), ($I_8$), ($I_{24}$) oder ($I_{25}$). Dazu zählen beispielsweise Polyarylenether A' mit 0 bis 100 Mol-% wiederkehrenden Einheiten ($I_1$) und 0 bis 100 Mol-% wiederkehrenden Einheiten ($I_2$).

Die Polyarylenether A' können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Derartige Co- oder Blockcopolymere enthalten jeweils mindestens ein äußeres Polyarylenethersegment mit einer Hydroxyendgruppe. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether A' mittlere Molekulargewichte $\overline{M}_n$ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96 %iger Schwefelsäure bei jeweils 20°C bzw. 25°C gemessen.

Polyarylenether mit wiederkehrenden Einheiten I sind an sich bekannt und können nach bekannten Methoden hergestellt werden.

Sie entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US-A-3 441 538, 4 108 837, der DE-A1-27 38 962 und der EP-A1-361 beschrieben. Polyarylenether, die Carbonylfunktionen enthalten, sind auch durch elektrophile (Friedel-Crafts)-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethern sind beispielsweise in den EP-A-113

112 und 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Polyarylenether mit wiederkehrenden Einheiten I und Hydroxyendgruppen können beispielsweise durch geeignete Wahl des molaren Verhältnisses zwischen Dihydroxy- und Dichlormonomeren hergestellt werden (siehe z.B. J.E. McGrath et al: Polym. Eng. Sci. 17, 647 (1977); H.-G. Elias "Makromoleküle" 4. Aufl., S. 490-493, (1981), Hüthig & Wepf-Verlag, Basel).

Bevorzugt werden Polyarylenether A' verwendet, die 0,02 bis 2 Gew.-% Hydroxyendgruppen aufweisen. Ganz besonders werden solche bevorzugt, die 0,1 bis 1,5 Gew.-% Hydroxyendgruppen haben.

Erfindungsgemäß werden die Polyarylenether A' mit Phthalsäureanhydriden der allgemeinen Formel III umgesetzt. Darunter sind die Chlorphthalsäureanhydride und die Fluorphthalsäureanhydride bevorzugt. Besonders bevorzugt werden 3-Fluorphthalsäureanhydrid oder 3-Chlorphthalsäureanhydrid verwendet. Es kann aber auch von Vorteil sein, eine Mischung aus unterschiedlichen Phthalsäureanhydriden III, beispielsweise eine Mischung aus 3-Fluorphthalsäureanhydrid und 3-Chlorphthalsäureanhydrid einzusetzen. Dabei ist es möglich, die unterschiedlichen Phthalsäureanhydride III gleichzeitig mit den Polyarylenethern A' umzusetzen. Es ist aber auch möglich, diese nacheinander beispielsweise zunächst 3-Fluorphthalsäureanhydrid und anschließend 3-Chlorphthalsäureanhydrid, umzusetzen.

Die Umsetzung der hydroxyterminierten Polyarylenether A' mit den Phthalsäureanhydriden (III) zu den Polyarylenethern A findet erfindungsgemäß in einem Lösungsmittel, insbesondere einem Lösungsmittel, das sowohl die Polyarylenether A', die Phthalsäureanhydride III als auch Kaliumfluorid hinreichend gut löst, statt. Als Beispiele geeigneter organischer Lösungsmittel sind aliphatische oder aromatische Sulfoxide oder Sulfone wie Dimethylsulfoxid, Dimethylsulfon, 1,1-Dioxothiolan oder Diphenylsulfon, worunter Dimethylsulfoxid und Diphenylsulfon bevorzugt zu nennen ist. Darüber hinaus kommen N-Cyclohexylpyrrolidon, N,N-Dimethylacetamid, Dimethylformamid und N-Methylpyrrolidon in Betracht. Besonders bevorzugt wird N-Methylpyrrolidon eingesetzt. Für die Umsetzungen sind im allgemeinen erhöhte Temperaturen erforderlich. In der Regel findet die Reaktion unterhalb einer Temperatur von 60°C nur langsam statt. Meist sind Temperaturen von 100°C oder darüber erforderlich. Im allgemeinen finden die Umsetzungen in einem Temperaturbereich von 120 bis 250°C statt. Höhere Temperaturen als 230°C sind meist nicht erforderlich.

Die zur Umsetzung erforderlichen Reaktionszeiten betragen im allgemeinen von 0,1 bis 5 Stunden.

Erfindungsgemäß wird die Umsetzung in Gegenwart von Kaliumfluorid durchgeführt. Im allgemeinen wird das Kaliumfluorid in stoichiometrischen Mengen zu Phthalsäureanhydrid III eingesetzt. Die Menge an Kaliumfluorid kann aber auch darüber liegen und beispielsweise bis zu 10 Mol pro Mol Phthalsäureanhydrid III betragen. Sie kann auch geringfügig weniger sein. Meist ist der Umsatz nicht mehr vollständig, wenn die Menge an Kaliumfluorid weniger als 1 Mol pro Mol Phthalsäurenahydrid III beträgt. In der Regel beträgt das molare Verhältnis von Kaliumfluorid zu Phthalsäureanhyrid von 1 bis 7, bevorzugt von 1,1 bis 6.

Die Reaktion kann auch in Gegenwart von Kaliumcarbonat durchgeführt werden. Im allgemeinen wird von 0,05 bis 10 Mol Kaliumcarbonat pro Mol Kaliumfluorid verwendet. Die Menge an Kaliumcarbonat kann jedoch auch kleiner sein, beispielsweise von 0,05 bis 9 Mol Kaliumcarbonat pro Mol Kaliumfluorid betragen. In der Regel bringt es keine Vorteile mehr, wenn Kaliumcarbonat in Mengen von mehr als 15 Mol pro Mol Kaliumfluorid zugegeben wird. Meist wird die Umsetzung in Gegenwart von 0,05 bis 7 Mol Kaliumcarbonat pro Mol Kaliumfluorid durchgeführt. Die Umsetzung der Polyarylenether A' mit den Phthalsäureanhydriden kann sowohl mit gereinigten und isolierten Polyarylenethern A' vorgenommen werden. Es ist aber auch möglich, diese Umsetzung direkt an die Herstellung der Polyarylenether A' anzuschließen, ohne diese vorher zu reinigen oder zu isolieren. Das Reaktionsprodukt wird vorzugsweise durch Ausfällen in einem Nichtlösungsmittel, beispielsweise einem niedermolekularen Alkohol wie Methanol, Ethanol, Propanol oder Isopropanol oder auch Wasser sowie Mischungen derselben gewonnen. Es ist aber auch möglich, das Reaktionslösungsmittel aus dem Reaktionsprodukt, beispielsweise im Entgasungsextruder oder Dünnschichtverdampfer, zu entfernen und so das Reaktionsprodukt zu isolieren.

Der Anteil an Anhydridendgruppen im Polyarylenether A kann durch die bekannten Methoden der allgemeinen organischen Analytik wie Titration, IR-, UV- und NMR-Spektroskopie bestimmt werden.

Die nach dem erfindungsgemäßen Verfahren hergestellten Polyarylenether A weisen im allgemeinen die selben Molekulargewichte auf, wie die ihnen zugrunde liegenden Polyarylenether A', d.h. ein Molekulargewichtsabbau findet im Verlauf der Umsetzung von A' mit den Phthalsäureanhydriden III nicht oder nur im untergeordneten Maße statt.

Die so hergestellten Polyarylenether A zeichnen sich durch ihre sehr helle Eigenfarbe und einen hohen Anteil an Anhydridendgruppen aus.

Sie eignen sich zum Herstellen von Formmassen.

In einer der bevorzugten Ausführungsformen enthalten die Formmassen die Komponenten

A) 5 bis 99 Gew.-%, insbesondere 5 bis 50 Gew.-% Polyarylenether A,
B) 0 bis 90 Gew.-%, insbesondere 15 bis 80 Gew.-% Polyarylenether B und

C) 1 bis 45 Gew.-%, insbesondere 10 bis 35 Gew.-% faser- oder teilchenförmige Verstärkungs- oder Füllstoffe oder deren Mischungen, wobei sich die Summe der Komponenten A bis C jeweils zu 100 Gew.-% addiert.

In einer anderen bevorzugten Ausführungsform enthalten die Formmassen die Komponenten

A) 1 bis 99 Gew.-%, insbesondere 10 bis 90 Gew.-% Polyarylenether A,
B) 0 bis 90 Gew.-%, insbesondere 5 bis 80 Gew.-% Polyarylenether B,
C) 0 bis 45 Gew.-%, insbesondere 10 bis 35 Gew.-% faser- oder teilchenförmige Verstärkungs- oder Füllstoffe oder deren Mischungen,
D) 1 bis 99 Gew.-%, insbesondere 10 bis 90 Gew.-% thermoplastische Polyamide D und
E) 0 bis 25 Gew.-%, insbesondere 2 bis 20 Gew.-% schlagzähmodifizierende Kautschuke E, wobei sich die Summe der Komponenten A bis E jeweils zu 100 Gew.-% addiert.

Weitere Formmassen, die bevorzugt werden, enthalten die Komponenten

A) 10 bis 88 Gew.-% Polyarylenether A
B) 0 bis 80 Gew.-% Polyarylenether B,
D) 10 bis 88 Gew.-% thermoplastische Polyamide D und
E) 2 bis 20 Gew.-% schlagzähmodifizierende Kautschuke E, wobei sich die Summe der Komponenten jeweils zu 100 Gew.-% addiert.

Komponente B

Neben den Polyarylenethern A können die Formmassen auch Polyarylenether B enthalten, deren Endgruppen sich von denen der Polyarylenether A unterscheiden und die wiederkehrenden Einheiten der allgemeinen Formel IV

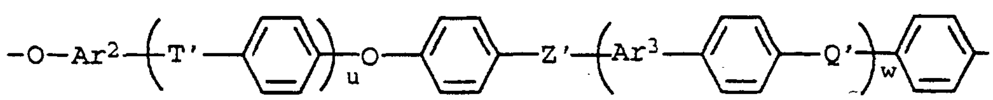 (IV)

enthalten.
Dabei haben u und w die gleiche Bedeutung wie t und q. u und w können, brauchen aber nicht mit t und q identisch sein, d.h. u und w können unabhängig von t und q gleich oder verschieden von diesen sein. T', Q' und Z' haben die gleiche Bedeutung wie T, Q und Z und können, brauchen aber nicht mit T, Q und Z identisch sein, d.h. T', Q' und Z' können unabhängig von T, Q und Z gleich oder verschieden von T, Q und Z sein. $Ar^2$ und $A^3$ können gleich oder verschieden von Ar und $Ar^1$ sein, d.h. $Ar^2$ und $Ar^3$ können, brauchen aber nicht mit Ar und $Ar^1$ identisch sein und haben die gleiche Bedeutung wie Ar und $Ar^1$.
Als Komponente B können auch Polyarylenethersegmente enthaltende Copolymere eingesetzt werden.
Die Polyarylenether B können beispielsweise Halogen-, Methoxy-, Hydroxy-, Phenoxy-, Benzyloxy- oder Aminoendgruppen enthalten. Bevorzugt werden Polyarylenether B mit Halogen- und/oder Methoxyendgruppen verwendet.
Diese Polyarylenether B sind, wie vorstehend angegeben, bekannt oder nach bekannten Methoden erhältlich.
Die Polyarylenether B können in den erfindungsgemäßen Formmassen mit einem Anteil von bis zu 90, vorzugsweise bis zu 80 Gew.-% vorhanden sein.

Komponente C

Neben den Komponenten A und B können die Formmassen noch Verstärkungsmittel oder Füllstoffe enthalten. Als Komponente C können die erfindungsgemäßen Formmassen z.B. bis 45, vorzugsweise 10 bis 35 Gew.-% faser- oder teilchenförmige Füllstoffe oder Verstärkungsstoffe oder deren Mischungen enthalten.
Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.
Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Komponente D

Neben den Komponenten A bis C können die erfindungsgemäßen Formmassen auch noch thermoplastische Polyamide enthalten. Die als Komponente D in den Massen enthaltenen Polyamide sind ebenfalls bekannt und umfassen teilkristalline und amorphe Harze mit einem Molekulargewicht (Gewichtsmittelwert) von mindestens 5000, die gewöhnlich als Nylon bezeichnet werden. Solche Polyamide sind z.B. in den US-Patentschriften 2 071 250, 2 071 251, 2 130 523, 2 130 948, 2 241 322, 2 312 966, 2 512 606 und 3 393 210 beschrieben.

Die Polyamide D können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren bzw. Polyaddition von entsprechenden Lactamen hergestellt werden.

Beispiele für derartige Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-%, der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Als Monomere kommen auch cyclische Diamine wie die der allgemeinen Formel V

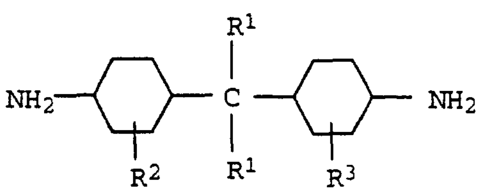

(V)

in der

$R^1$ Wasserstoff oder eine $C_1$-$C_4$-Alkylgruppe,
$R^2$ eine $C_1$-$C_4$-Alkylgruppe oder Wasserstoff und
$R^3$ eine $C_1$-$C_4$-Alkylgruppe oder Wasserstoff bedeutet, in Betracht.

Besonders bevorzugte Diamine V sind Bis(4-aminocyclohexyl)-methan, Bis(4-amino-3-methylcyclohexyl)methan, Bis(4-aminocyclohexyl)-2,2-propan oder Bis(4-amino-3-methylcyclohexyl)-2,2-propan.

Als weitere Diamine V seien 1,3- oder 1,4-Cyclohexandiamin oder Isophorondiamin genannt.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z.B. nach dem in den EP-A-129 195 und EP 129 196 beschriebenen Verfahren erfolgen.

Bevorzugte teilaromatische Polyamide sind solche, die einen Gehalt an Triamineinheiten, insbesondere Einheiten des Dihexamethylentriamins von unter 0,5 Gew.-% aufweisen. Besonders bevorzugt werden solche teilaromatischen Polyamide mit Triamingehalten von 0,3 Gew.-% oder weniger.

Bevorzugt werden lineare Polyamide mit einem Schmelzpunkt über 200°C.

Bevorzugte Polyamide sind Polyhexamethylenadipinsäureamid, Polyhexamethylensebacinsäureamid und Polycaprolactam sowie Polyamid 6/6T und Polyamid 66/6T sowie Polyamide, die cyclische Diamine als Comonomere enthalten. Die Polyamide weisen im allgemeinen eine relative Viskosität von 2,0 bis 5 auf, bestimmt an einer 1 gew.-%igen Lösung in 96 %iger Schwefelsäure bei 23°C, was einem Molekulargewicht (Zahlenmittel) von etwa 15 000 bis 45 000 entspricht. Polyamide mit einer relativen Viskosität von 2,4 bis 3,5, insbesondere 2,5 bis 3,4, werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Der Anteil der Polyamide D an den Formmassen kann 1 bis 99, vorzugsweise 10 bis 90 und insbesondere 10 bis 40 Gew.-% betragen.

Komponente E

Neben den Komponenten A bis D können die Formmassen auch bis 25, vorzugsweise 2 bis 20 Gew.-% eines schlagzähmodifizierenden Kautschuks E enthalten. Es können übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl (meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die

Struktur durch die Reihenfolge der Monomerenzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tertiär-Butyl (meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Neben den beschriebenen Bestandteilen A bis E können die erfindungsgemäßen Formmassen noch z.B. bis 40 Gew.-% weiterer Additive wie Flammschutzmittel, Farbstoffe, Pigmente oder Stabilisatoren sowie Gleitmittel enthalten.

Die erfindungsgemäßen Formmassen können nach an sich bekannten Verfahren, beispielsweise Extrusion, hergestellt werden.

Enthalten die erfindungsgemäßen thermoplastischen Formmassen neben den Polyarylethern A weitere Bestandteile, so können die Formmassen z.B. hergestellt werden, indem man die Ausgangskomponenten in üblichen Mischvorrichtungen wie Schneckenextrudern, vorzugsweise Zweischneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 380°C erforderlich.

Die füllstoffhaltigen Formmassen weisen sehr gute Zähigkeiten und Festigkeiten auf. Daneben zeichnen sie sich durch ihre sehr guten Verarbeitungs- und Hydrolysestabilitäten aus. Sie eignen sich daher beispielsweise zum Herstellen von Formteilen, die hohen mechanischen Belastungen oder chemischen Einflüssen ausgesetzt sind.

## Beispiele

In den folgenden Beispielen wurde der Anteil an Anhydridendgruppen durch FT-IR-Spektroskopie bestimmt.

Die Viskositätszahl (VZ) der Produkte wurde in 1 %iger Lösung in N-Methylpyrrolidon bei 25°C bestimmt.

Die Hydroxylendgruppenkonzentration wurde durch potentiometrische Titration in Dimethylformamid mit methanolischer KOH-Lösung gemessen. Hierzu wurde jeweils 1 g Polymer in Dimethylformamid gelöst und titriert. Die Berechnung der Gewichtsprozente der Hydroxyendgruppen erfolgte, indem das durch Titration ermittelte Gewicht der Hydroxygruppen durch die jeweilige Polymereinwaage geteilt und mit 100 multipliziert wurde.

Die Schmelzestabilität der Formmassen wurde durch Messung des Schemlzvolumenindexes (MVI-Werts)

der Schmelze nach 4 bzw. 24 Minuten Standzeit bei einer Temperatur von 400°C bzw. 340°C und einer Belastung von 21,6 kg bzw. 10 kg bestimmt. Als Zahlenwert ist die, während dieser Zeit eintretende Änderung, bezogen auf den Ausgangswert angegeben (in Prozent).

Das getrocknete Granulat aus den Formmassen wurde zu Normkleinstäben (50 x 6 x 4 mm) und Rundscheiben (Durchmesser 60 mm, Dicke 2 mm) sowie Zugstäben (150 x 20 (10) x 4 mm) gespritzt.

Das Elastizitätsmodul (E-Modul [N/mm$^2$]) wurde nach DIN 53 457 aus der Neigung der Tangente am Ursprung der Zugspannungskurve bei einer Prüfgeschwindigkeit von 1 mm pro Minute an Zugstäben ermittelt (Mittelwert aus 10 Prüfungen).

Die Kerbschlagzähigkeiten ($a_k$ [kJ/m$^2$]) wurden an Normkleinstäben nach DIN 53 453 dadurch bestimmt, daß man die frei aufliegenden Normkleinstäbe einer plötzlichen Schlagbeanspruchung aussetzte, wobei die Energie zum Brechen der Stäbe bestimmt wurde (10 Einzelprüfungen).

Die Durchstoßarbeiten (Wges N/m) wurden an Rundscheiben nach DIN 53 443 dadurch ermittelt, daß man jeweils eine fest eingespannte Rundscheibe mit einem Durchstoßkörper mit gleichbleibender Geschwindigkeit (4,5 m/s) durchstoßen wird. Aus dem Kraft-Verformungsverlauf wurde die Durchstoßarbeit ermittelt (5 Einzelmessungen).

Als Maß für die Hydrolysebeständigkeit wurde die Abnahme der Zugfestigkeit (in Prozent) vor und nach 100 Stunden Lagerung von Zugstäben in Wasser bei 130°C im Autoklaven bestimmt. Die Zugfestigkeit ($\sigma_B$ [N/mm$^2$]) wurde mittels Zugversuch nach DIN 53 455 gemessen, (10 Einzelmessungen an Zugstäben).

Beispiel 1

400 g eines Polyarylenethers aus 4,4'-Di-(4-hydroxyphenyl)sulfon und 4,4'-Dichlordiphenylsulfon (VZ = 55 ml/g, 0,12 Gew.-% OH-Endgruppen) wurden in 1200 ml N-Methylpyrrolidon gelöst. Die Lösung wurde auf 180°C erwärmt. Nach Zugabe von 5,4 g Kaliumfluorid und 11,1 g 4-Fluorphthalsäureanhydrid wurde über einen Zeitraum von 1 h gerührt. Das Reaktionsprodukt wurde durch Fällung in Wasser isoliert.

Durch Gehalt an Phthalsäureanhydridendgruppen betrug 0,9 Gew.-%. Die Viskositätszahl des Produkts betrug 52,4 ml/g.

Der so hergestellte Polyarylenether wurde als Komponente $A_1$ in den Formmassen verwendet.

Beispiel 2

400 g eines Polyarylenethers aus 4,4'-Di-(4-hydroxyphenyl)sulfon und 4,4'-Dichlordiphenylsulfon, VZ = 44 ml/g, 0,25 Gew.-% OH-Endgruppen) wurden in 1200 ml N-Methylpyrrolidon gelöst. Die Lösung wurde auf 180°C erwärmt. Nach Zugabe von 11,6 g Kaliumfluorid und 23,7 g 4-Fluorphthalsäureanhydrid wurde über einen Zeitraum von 3 h gerührt. Das Reaktionsprodukt wurde durch Fällung in Wasser isoliert.

Der Gehalt an Phthalsäureanhyridendgruppen betrug 1,76 Gew.-%. Die Viskositätszahl betrug 43 ml/g.

Der so hergestellte Polyarylenether wurde als Komponente $A_2$ in den Formmassen verwendet.

Beispiel 3

Unter Stickstoffatmosphäre wurden 29 kg N-Methylpyrrolidon, 4,593 kg Dichlordiphenylsulfon und 4,002 kg Dihydroxydiphenylsulfon gelöst und mit 2,923 kg wasserfreiem Kaliumcarbonat versetzt. Die Reaktionsmischung wurde bei einem Druck von 300 mbar unter ständigem Abdestillieren des Reaktionswassers und N-Methylpyrrolidons zunächst 1 h auf 180°C erhitzt und dann 6 h bei 190°C weiter umgesetzt.

Nach dieser Zeit wurden 235 g 4-Fluorphthalsäureanhydrid und 115 g Kaliumfluorid der Mischung zugesetzt und die Reaktion 0,2 h bei 190°C weitergeführt.

Nach Zugabe von 40 kg N-Methylpyrrolidon wurden die anorganischen Bestandteile abfiltriert und das Polymere durch Fällung in Wasser isoliert. Nach Trocknung bei 160°C wurde ein weißes Produkt erhalten, dessen Gehalt an Phthalsäureanhydrid 0,78 Gew.-% betrug. Die Viskositätszahl des Polyarylenethers betrug 51,2 ml/g.

Das so hergestellte Produkt wurde als Komponente $A_3$ in den Formmassen verwendet.

Beispiel 4

Unter Stickstoffatmosphäre wurden 29 kg N-Methylpyrrolidon, 4,593 kg Dichlordiphenylsulfon und 3,6524 kg Bisphenol A gelöst und mit 2,923 kg wasserfreiem Kaliumcarbonat versetzt.

Die Reaktionsmischung wurde bei einem Druck von 300 mbar unter ständigem Abdestillieren des Reaktionswassers und N-Methylpyrrolidons zunächst 1 h auf 180°C erhitzt und dann 6 h bei 190°C weiter umgesetzt.

Nach dieser Zeit wurden 235 g 4-Fluorphthalsäureanhydrid und 115 g Kaliumfluorid der Mischung zugesetzt und die Reaktion 0,25 h bei 190°C weitergeführt.

Nach Zugabe von 40 kg N-Methylpyrrolidon wurden die anorganischen Bestandteile abfiltriert und das Polymere durch Fällung in Wasser isoliert. Nach Trocknung bei 160°C wurde ein weißes Produkt erhalten, dessen Gehalt an Phthalsäureanhydrid 0,71 Gew.-% betrug. Die Viskositätszahl des Produkts betrug 53,3 ml/g.

Der so hergestellte Polyarylenether wurde als Komponente $A_4$ in den Formmassen verwendet.

Vergleichsbeispiel

Polyarylenether mit über Estergruppen gebundenen Anhydridendgruppen

400 g eines Polyarylenethers aus 4,4'-Di-(4-hydroxyphenyl)sulfon und 4,4'-Dichlordiphenylsulfon (VZ = 55 ml/g, 0,12 Gew.-% OH-Endgruppen wurden in 1200 ml N-Methylpyrrolidon (abs.) gelöst. Anschließend wurde die Lösung auf 80°C erwärmt. Nach Zugabe von 5,1 g Triethylamin wurde über einen Zeitraum von 30 Minuten 10,5 g Trimellitsäureanhydridchlorid, gelöst in 50 ml THF, zugegeben. Nach beendeter Zugabe wurde die Reaktionsmischung noch 2 Stunden bei 80°C gehalten. Das Reaktionsprodukt wurde durch Fällung in Wasser isoliert.

Der Gehalt an Trimellitsäureanhydridendgruppen betrug 1,45 Gew.-%. Die Viskositätszahl des Polyarylenethers betrug 55 ml/g.

Das so hergestellte Produkt wurde als Komponente $A_v$ in den Formmassen verwendet.

Komponente $B_1$

Polyarylenether aus 4,4'-Dihydroxydiphenylsulfon und 4,4'-Dichlordiphenylsulfon (VZ = 59 ml/g, gemessen in 1%iger Lösung eines 1:1-Gemisches von Phenol und 1,2-Dichlorbenzol; z.B. Handelsprodukt Ultrason® E 2010, BASF) und im wesentlichen Chlor- und Methoxy-Endgruppen.

Komponente $B_2$

Polyarylenether aus Bisphenol A und 4,4'-Dichlordiphenylsulfon (VZ = 64 ml/g, gemessen in 1%ige Lösung in einem 1:1-Gemisch von Phenol und 1,2-Dichlorbenzol; z.B. Handelsprodukt Ultrason® S 2010, BASF) und im wesentlichen Chlor- und Methoxy-Endgruppen.

Komponente $C_1$

Glasfaserrovings einer Dicke von 10 µm aus E-Glas, die mit einer Schlichte aus Polyurethan ausgerüstet waren. Nach dem Einarbeiten lagen die mittleren Längen der Glasfasern etwa zwischen 0,1 und 0,5 mm.

Komponente $D_1$

Polyhexamethylenadipinsäureamid mit einem K-Wert (nach Fikentscher) von 76, entsprechend einer relativen Viskosität $\eta_{rel}$ von 2,95, gemessen 1 gew.-%ig in 96%iger Schwefelsäure.

Komponente $D_2$

Teilaromatisches Copolyamid, kondensiert aus 55 Gew.-Teilen Terephthalsäure, 35 Teilen ε-Caprolactam und 38,5 Teilen Hexamethylendiamin, charakterisiert durch eine relative Viskosität von 2,4 (gemessen 1 gew.-%ig in 96%iger Schwefelsäure) und einem Triamingehalt von 0,27 Gew.-%.

Komponente $D_3$

Teilaromatisches Copolyamid, kondensiert aus 39,1 Gew.-Teilen Hexamethylendiamin, 37,5 Gew.-Teilen Terephthalsäure, 20,6 Gew.-Teilen Isophthalsäure und 2,9 Gew.-Teilen Bis(4-amino-cyclohexyl)methan, charakterisiert durch eine relative Viskosität von 2,3 (gemessen 1 gew.-%ig in 96%iger Schwefelsäure).

Komponente E

Ethylen-Propylen-Kautschuk, mit 0,7 Gew.-% Maleinsäure/Maleinsäureanhydrid modifiziert, gekennzeichnet durch einen MFI-Wert von 3 g pro 10 min (gemessen bei 2,16 kg/230°C).

Herstellung der Formmassen

Die Bestandteile wurden in einem Zweiwellenextruder bei einer Massetemperatur von 310 bis 340°C gemischt. Die Schmelze wurde durch ein Wasserbad geleitet und granuliert, getrocknet und zu den Testkörpern verarbeitet.

Die Ergebnisse der anwendungstechnischen Prüfungen sind den folgenden Tabellen zu entnehmen.

Tabelle 1 -

| Glasfaserverstärkte Formmassen | | | | | | | | | |
|---|---|---|---|---|---|---|---|---|---|
| Formmasse Nr. Komponente [Gew.-%] | V1 | V2 | 1 | 2 | 3 | 4 | 5 | V3 | 6 |
| $A_1$ | - | - | 5 | - | - | - | - | - | - |
| $A_2$ | - | - | - | 5 | - | - | - | - | - |
| $A_3$ | - | - | - | - | 5 | 20 | 40 | - | - |
| $A_4$ | - | - | - | - | - | - | - | - | 5 |
| $A_v$ | - | 5 | - | - | - | - | - | - | - |
| $B_1$ | 70 | 65 | 65 | 65 | 65 | 50 | 30 | - | - |
| $B_2$ | - | - | - | - | - | - | - | 70 | 65 |
| C | 30 | 30 | 30 | 30 | 30 | 30 | 30 | 30 | 30 |
| Eigenschaften Schlagzähigkeit [kJ/m$^2$] | 22,9 | 26,8 | 27 | 29,1 | 26,4 | 32,0 | 37,1 | 23,2 | 27,1 |
| E-Modul [N/mm$^2$] | 9300 | 9250 | 9300 | 9300 | 9250 | 9200 | 9200 | 8900 | 8950 |
| Zugfestigkeit [N/mm$^2$] | 133 | 142 | 143 | 149 | 141 | 164 | 174 | 127 | 140 |
| Schmelzestabilität [%] | 27 | 87 | 32 | 36 | 29 | 32 | 36 | 21 | 25 |
| V1; V2; V3: Vergleichsversuche | | | | | | | | | |

Aus den Versuchen geht hervor, daß die erfindungsgemäßen glasfaserverstärkten Formmassen gegenüber glasfaserverstärkten Formmassen auf der Basis von Polyarylethern, die keine Anhydridendgruppen aufweisen, höhere Schlagzähigkeiten und Zugfestigkeiten aufweisen. Im Vergleich zur Formmasse, die Polyarylether mit über eine Estergruppe fixierte Anhydridendgruppen enthält, zeichnen sich die erfindungsgemäßen glasfaserverstärkten Formmassen zusätzlich durch bessere Schmelzestabilitäten aus.

Tabelle 2 -

| Polyamidhaltige Formmassen | | | | | | | | | | | |
|---|---|---|---|---|---|---|---|---|---|---|---|
| Formmasse Nr. Komponente [Gew.-%] | V4 | V5 | 7 | V6 | 8 | 9 | V7 | 10 | 11 | 12 | 13 |
| $A_2$ | - | - | 15 | - | - | - | - | - | - | - | - |
| $A_3$ | - | - | - | - | 10 | 25 | - | - | 10 | 40 | 60 |
| $A_v$ | - | 15 | - | - | - | - | - | 10 | - | - | - |
| $B_1$ | 84 | 69 | 69 | 66 | 56 | 41 | 66 | 56 | 56 | 26 | 6 |
| $D_1$ | 16 | 16 | 16 | - | - | - | - | - | - | - | - |

Tabelle 2 - (fortgesetzt)

| Polyamidhaltige Formmassen | | | | | | | | | | | |
|---|---|---|---|---|---|---|---|---|---|---|---|
| Formmasse Nr. / Komponente [Gew.-%] | V4 | V5 | 7 | V6 | 8 | 9 | V7 | 10 | 11 | 12 | 13 |
| $D_2$ | - | - | - | 34 | 34 | 34 | 28 | 28 | 28 | 28 | 28 |
| E | - | - | - | - | - | - | 6 | 6 | 6 | 6 | 6 |
| Eigenschaften / Durchstoßarbeit [Nm] | 0,5 | 23 | 24 | | 34 | 42 | 1 | 59 | 58 | 66 | 69 |
| Kerbschlagzähigkeit [kJ/m$^2$] | 1,2 | 3,2 | 3,1 | 1 | 4,1 | 5 | 1,2 | 3,7 | 3,9 | 11 | 14,1 |
| Schmelzestabilität * [%] | 42 | 79 | 49 | 27 | 31 | 34 | 29 | 51 | 32 | 34 | 36 |
| Abnahme der Zugfestigkeit [%] | 34 | 36 | 12 | ng | ng | ng | 26 | 24 | 11 | 10 | 10 |
| V4 bis V7: Vergleichsversuche | | | | | | | | | | | |

* Die MVI-Werte wurden bei 340°C und einer Belastung von 10 kg gemessen.
ng = nicht gemessen

Die erfindungsgemäßen Formmassen zeichnen sich durch verbesserte Hydrolysebeständigkeit sowie gute mechanische Eigenschaften aus.

Tabelle 3 -

| Polyamidhaltige Formmassen | | | | | | |
|---|---|---|---|---|---|---|
| Formmasse Nr. / Komponente [Gew.-%] | V8 | V9 | 14 | V10 | 15 | 15 |
| $A_3$ | - | - | 10 | - | - | - |
| $A_4$ | - | - | - | - | 10 | 50 |
| $A_v$ | - | 10 | - | - | - | - |
| $B_1$ | 66 | 56 | 56 | - | - | - |
| $B_2$ | - | - | - | 66 | 56 | 16 |
| $D_3$ | 34 | 34 | 34 | 34 | 34 | 34 |
| Eigenschaften / Durchstoßarbeit [Nm] | 1 | 33 | 32 | 2 | 29 | 37 |
| Kerbschlagzähigkeit [kJ/m$^2$] | 1,5 | 5,1 | 5,6 | 1,7 | 4,7 | 8,2 |
| Schmelzestabilität * [%] | 4 | 33 | 5 | 4 | 5 | 6 |
| Abnahme der Zugfestigkeit [%] | 24 | 25 | 9 | ng | ng | ng |
| V8 bis V10: Vergleichsversuche<br>ng: nicht gemessen | | | | | | |

* Die MVI-Werte wurden bei 340°C und einer Belastung von 10 kg ermittelt.

## Patentansprüche

**1.** Verfahren zur Herstellung von Polyarylenethern mit wiederkehrenden Einheiten der allgemeinen Formel I

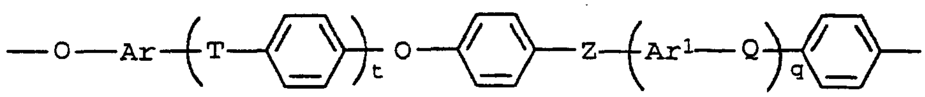

(I)

in denen t und q jeweils eine ganze Zahl 0, 1, 2 oder 3 bedeuten können,
T, Q und Z jeweils eine chemische Bindung oder eine Gruppe ausgewählt aus -O-, -S-, $-SO_2-$, S=O, C=O, -N=N-, $-R^aC=CR^b-$ und $-CR^cR^d-$ sein können, mit der Maßgabe, daß mindestens eine der Gruppen T, Q oder Z $-SO_2-$ oder C=O bedeutet und wenn t und q 0 sind, Z $-SO_2-$ oder C=O ist,
$R^a$ und $R^b$ jeweils ein Wasserstoffatom oder eine $C_1$- bis $C_{10}$-Alkylgruppe bedeuten,
$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, zusammen mit dem C-Atom, an das sie gebunden sind, eine $C_4$- bis $C_7$-Cycloalkylgruppe bilden, die mit einer oder mehreren $C_1$- bis $C_6$-Alkylgruppen substituiert sein kann, bedeuten,
Ar und $Ar^1$ für $C_6$- bis $C_{18}$-Arylgruppen stehen, wobei diese unsubstituiert sein können oder mit $C_1$- bis $C_{10}$-Alkyl, $C_6$- bis $C_{18}$-Aryl, $C_1$- bis $C_{10}$-Alkoxy oder Halogen substituiert sein können
und Anhydridendgruppen der Formel II

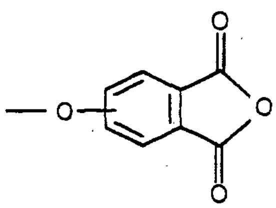

(II)

(Polyarylenether A), **dadurch gekennzeichnet, daß** man Polyarylenether mit wiederkehrenden Einheiten der allgemeinen Formel I und Hydroxyendgruppen (Polyarylenether A') mit Phthalsäureanhydriden der allgemeinen Formel III

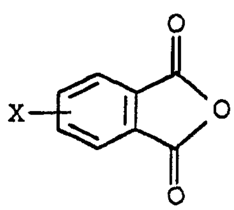

(III)

worin X Fluor, Chlor, Brom oder Jod bedeutet, in einem Lösungsmittel in Gegenwart von Kaliumfluorid umsetzt.

**2.** Verfahren nach Anspruch 1, **dadurch gekennzeichnet, daß** man die Umsetzung in Gegenwart von Kaliumcarbonat durchführt.

**3.** Verfahren nach Anspruch 1 oder 2, **dadurch gekennzeichnet, daß** man Polyarylenether A' mit
0 bis 100 Mol-% wiederkehrender Einheiten $I_1$

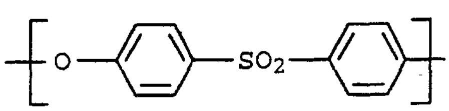

$(I_1)$

und
0 bis 100 Mol-% wiederkehrender Einheiten $I_2$

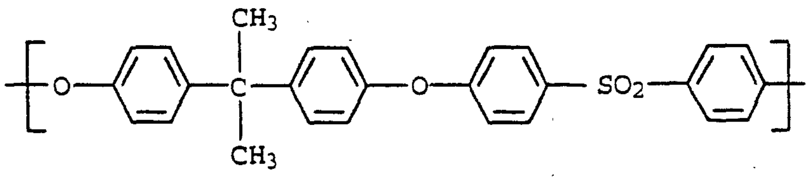

(I$_2$).

verwendet.

**4.** Verwendung der nach dem Verfahren gemäß einem der Ansprüche 1 bis 3 hergestellten Polyarylenethern A zur Herstellung von Formmassen.

**5.** Formmassen enthaltend, bezogen auf die Summe der Komponenten A bis C

A) 5 bis 99 Gew.-% Polyarylenether A,

B) 0 bis 90 Gew.-% Polyarylenether B mit Endgruppen, die sich von denen der Polyarylenether A unterscheiden, und mit wiederkehrenden Einheiten der allgemeinen Formel IV

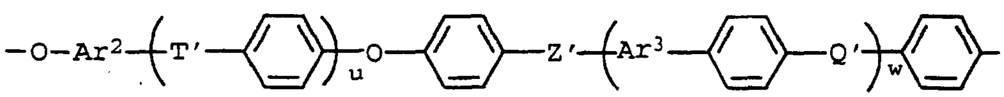

(IV)

in denen u und w die gleiche Bedeutung wie t und q haben, T', Q' und Z' die gleiche Bedeutung wie T, Q und Z haben und $Ar^2$ und $Ar^3$ die gleiche Bedeutung wie Ar und $Ar^1$ haben und

C) 1 bis 45 Gew.-% faser- oder teilchenförmiger Verstärkungs- oder Füllstoffe oder deren Mischungen.

**6.** Formmassen enthaltend, bezogen auf die Summe der Komponenten A bis E

A) 1 bis 99 Gew.-% Polyarylenether A,

B) 0 bis 90 Gew.-% Polyarylenether B,

C) 0 bis 45 Gew.-% faser- oder teilchenförmiger Verstärkungs- oder Füllstoffe oder deren Mischungen,

D) 1 bis 99 Gew.-% thermoplastische Polyamide D und

E) 0 bis 25 Gew.-% schlagzähmodifizierende Kautschuke E.

**7.** Formmassen nach Anspruch 6, enthaltend Polyamide D aus, bezogen auf das Polyamid D,
40 bis 90 Gew.-% Einheiten, die sich von Terephthalsäure und Hexamethylendiamin ableiten,
0 bis 50 Gew.-% Einheiten, die sich von ε-Caprolactam ableiten und/oder
0 bis 60 Gew.-% Einheiten, die sich von Adipinsäure und Hexamethylendiamin ableiten.

**8.** Formmassen nach einem der Ansprüche 5 bis 7, in denen als Polyarylenether A solche mit 0 bis 100 Mol-% wiederkehrenden Einheiten $I_1$ und 0 bis 100 Mol-% wiederkehrenden Einheiten $I_2$ verwendet werden.

**9.** Verwendung der Formmassen gemäß einem der Ansprüche 5 bis 7 zur Herstellung von Formkörpern, Fasern oder Folien.

**10.** Formkörper, Fasern oder Folien, erhältlich aus den Formmassen gemäß einem der Ansprüche 5 bis 7.

## Claims

**1.** A process for the preparation of polyarylene ethers having repeating units of the formula I

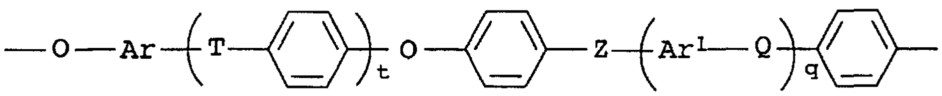

(I)

where t and q may each be an integer 0, 1, 2 or 3,
T, Q and Z may each be a chemical bond or a group selected from -O-, -S-, $-SO_2-$, S=O, C=O, -N=N-, $-R^aC=CR^b-$ and $-CR^cR^d-$, with the proviso that at least one of the groups T, Q or Z is $-SO_2-$ or C=O and, if t and q are 0, Z is $-SO_2-$ or C=O,
$R^a$ and $R^b$ are each hydrogen or $C_1$-$C_{10}$-alkyl,
$R^c$ and $R^d$ are each hydrogen, $C_1$-$C_{10}$-alkyl, $C_1$-$C_{10}$-alkoxy or $C_6$-$C_{18}$-aryl, where the abovementioned groups may each be substituted by fluorine and/or chlorine, or, together with the carbon atom to which they are bonded, form a $C_4$-$C_7$-cycloalkyl group which may be substituted by one or more $C_1$-$C_6$-alkyl groups, and
Ar and $Ar^1$ are each $C_6$-$C_{18}$-aryl which may be unsubstituted or substituted by $C_1$-$C_{10}$-alkyl, $C_6$-$C_{18}$-aryl, $C_1$-$C_{10}$-alkoxy or halogen,
and terminal anhydride groups of the formula II

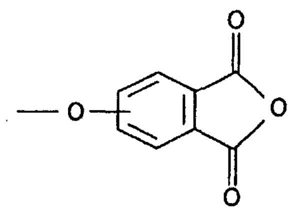

(II)

(polyarylene ether A), wherein polyarylene ethers having repeating units of the formula I and terminal hydroxyl groups (polyarylene ethers A') are reacted with phthalic anhydrides of the formula III

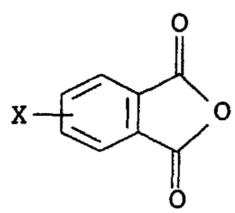

(III)

where X is fluorine, chlorine, bromine or iodine, in a solvent in the presence of potassium fluoride.

**2.** A process as claimed in claim 1, wherein the reaction is carried out in the presence of potassium carbonate.

**3.** A process as claimed in claim 1 or 2, wherein polyarylene ethers A' having
from 0 to 100 mol% of repeating units $I_1$

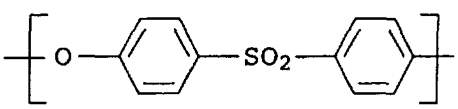

($I_1$)

and
from 0 to 100 mol% of repeating units $I_2$

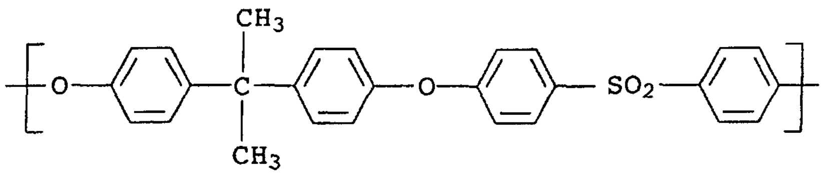 ($I_2$)

are used.

**4.** Use of a polyarylene ether A prepared by a process as claimed in any of claims 1 to 3 for the preparation of molding materials.

**5.** A molding material containing, based on the sum of components A to C,

A) from 5 to 99 % by weight of polyarylene ether A,

B) from 0 to 90 % by weight of polyarylene ether B having terminal groups which differ from those of the polyarylene ether A, and having repeating units of the formula IV

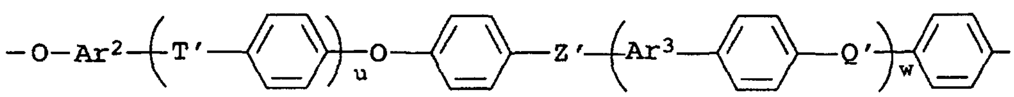 (IV)

where u and w have the same meanings as t and q, T', Q' and Z' have the same meanings as T, Q and Z and $Ar^2$ and $Ar^3$ have the same meanings as Ar and $Ar^1$, and

C) from 1 to 45 % by weight of fibrous or particulate reinforcing materials or fillers or mixtures thereof.

**6.** A molding material containing, based on the sum of the components A to E,

A) from 1 to 99 % by weight of polyarylene ether A,

B) from 0 to 90 % by weight of polyarylene ether B,

C) from 0 to 45 % by weight of fibrous or particulate reinforcing materials or fillers or mixtures thereof,

D) from 1 to 99 % by weight of thermoplastic polyamides D and

E) from 0 to 25 % by weight of rubber impact modifiers E.

**7.** A molding material as claimed in claim 6, containing polyamide D comprising, based on the polyamide D,
from 40 to 90 % by weight of units which are derived from terephthalic acid and hexamethylenediamine,
from 0 to 50 % by weight of units which are derived from ε-caprolactam or
from 0 to 60 % by weight of units which are derived from adipic acid and hexamethylenediamine.

**8.** A molding material as claimed in any of claims 5 to 7, in which the polyarylene ethers A used are those containing from 0 to 100 mol% of repeating units $I_1$ and from 0 to 100 mol% of repeating units $I_2$.

**9.** Use of the molding material as claimed in any of claims 5 to 7 for the production of moldings, fibers or films.

**10.** A molding, fiber or film obtainable from a molding material as claimed in any of claims 5 to 7.

## Revendications

1. Procédé de préparation de poly(éthers d'arylène) comportant des unités répétitives de la formule générale I

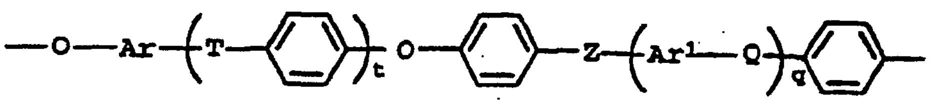

(I)

dans laquelle t et q peuvent à chaque fois représenter un nombre entier d'une valeur de 0, 1, 2 ou 3,
T, Q et Z peuvent à chaque fois représenter une liaison chimique ou un groupe choisi parmi -O-, -S-, $-SO_2-$, S=O, C=O, -N=N-, $-R^aC=CR^b-$ et $-CR^cR^d-$, avec la condition qu'au moins l'un des groupes T, Q ou Z représente $-SO_2-$ ou C=O et que quand t et q sont égaux à 0, Z représente $-SO_2-$ ou C=O,
$R^a$ et $R^b$ représentent à chaque fois un atome d'hydrogène ou un radical alkyle en $C_1$ à $C_{10}$,
$R^c$ et $R^d$ représentent à chaque fois un atome d'hydrogène, un radical alkyle en $C_1$ à $C_{10}$, alcoxy en $C_1$ à $C_{10}$ ou aryle en $C_6$ à $C_{18}$, les radicaux précités pouvant à chaque fois être substitués par des atomes de fluor et / ou de chlore, formant ensemble avec l'atome de C auquel ils sont liés un radical cycloalkyle en $C_4$ à $C_7$, qui peut être substitué par un ou plusieurs radicaux alkyle en $C_1$ à $C_6$,
Ar et $Ar^1$ représentent des radicaux alkyle en $C_6$ à $C_{18}$, ceux-ci pouvant être non substitués ou substitués par un radical alkyle en $C_1$ à $C_{10}$, aryle en $C_6$ à $C_{18}$, alcoxy en $C_1$ à $C_{10}$ ou un halogène,
et des groupes anhydride de la formule II

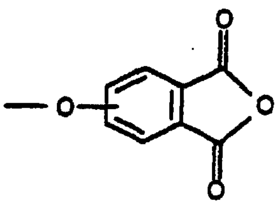

(II)

(poly(éther d'arylène) A), **caractérisé en ce que** l'on fait réagir des poly(éthers d'arylène) comportant des unités répétitives de la formule générale I et des groupes terminaux hydroxyle (poly(éthers d'arylène) A') avec des anhydrides d'acide phtalique de la formule générale III

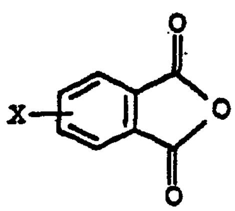

(III)

dans laquelle X représente du fluor, du chlore ou de l'iode, dans un solvant et en présence de fluorure de potassium.

2. Procédé selon la revendication 1, **caractérisé en ce qu** l'on entreprend la réaction en présence de carbonate de potassium.

3. Procédé selon la revendication 1 ou 2, **caractérisé en ce que** l'on utilise des poly(éthers d'arylène) A' comportant de 0 à 100% molaires d'unités répétitives $I_1$

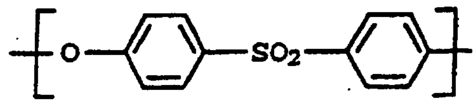

$(I_1)$

et
de 0 à 100% molaires d'unités répétitives $I_2$

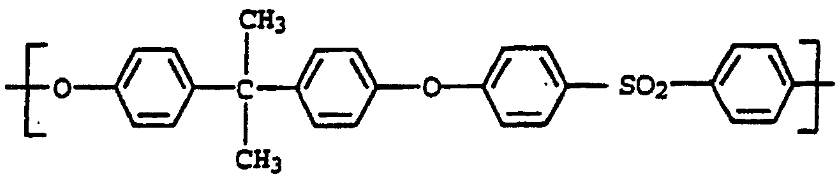

$(I_2)$.

**4.** Utilisation des poly(éthers d'arylène) préparés par le procédé selon l'une des revendications 1 à 3 pour la préparation de masses de moulage.

**5.** Masses de moulage contenant, par rapport à la somme des composants A à C,

A) de 5 à 99% en poids de poly(éther d'arylène) A,
B) de 0 à 90% en poids de poly(éther d'arylène) B comportant des groupes terminaux différents de ceux du poly(éther d'arylène) A, et comportant des unités répétitives de la formule générale IV

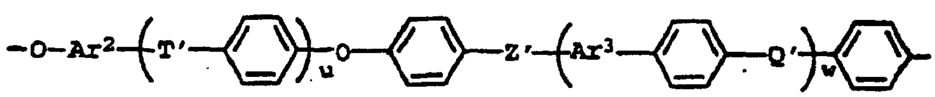

(IV)

dans laquelle u et w ont les mêmes significations que t et q, T', Q' et Z' ont les mêmes significations que T, Q et Z et $Ar^2$ et $Ar^3$ ont les mêmes significations que Ar et $Ar^1$, et
C) de 1 à 45% en poids de charges ou d'agents de renforcement fibreux ou particulaires, ou leurs mélanges.

**6.** Masses de moulage contenant, par rapport à la somme des composants A à E,

A) de 1 à 99% en poids de poly(éther d'arylène) A,
B) de 0 à 90% en poids de poly(éther d'arylène) B,
C) de 0 à 45% en poids de charges ou d'agents de renforcement fibreux ou particulaires, ou leurs mélanges,
D) de 1 à 99% en poids de polyamides thermoplastiques D et
E) de 0 à 25% en poids de caoutchoucs E modificateurs de la résistance au choc.

**7.** Masses de moulage selon la revendication 6, contenant des polyamides D constitués, par rapport au polyamide D, de
40 à 90% en poids d'unités dérivées d'acide téréphtalique et d'hexaméthylènediamine,
0 à 50% en poids d'unités dérivés du ε-caprolactame et / ou
0 à 60% en poids d'unités dérivées d'acide adipique et d'hexaméthylènediamine.

**8.** Masses de moulage selon l'une des revendications 5 à 7, dans lesquelles on utilise en tant que poly(éthers d'arylène) ceux comportant de 0 à 100% molaires d'unités répétitives $I_1$ et de 0 à 100% molaires d'unités répétitives $I_2$.

**9.** Utilisation des masses de moulage selon l'une des revendications 5 à 7 pour la production de corps moulés, de fibres ou de feuilles.

**10.** Corps moulés, fibres ou feuilles que l'on peut obtenir à partir des masses de moulage selon l'une des revendications 5 à 7.